(19) Europäisches Patentamt
European Patent Office
Office européen des brevets

(11) EP 0 444 703 B1

(12) **EUROPEAN PATENT SPECIFICATION**

(45) Date of publication and mention of the grant of the patent: **05.06.1996 Bulletin 1996/23**

(51) Int Cl.6: **G02B 5/30**

(21) Application number: **91103118.5**

(22) Date of filing: **01.03.1991**

(54) **Polarizers, a method for producing the same and liquid crystal display devices**

Polarisatoren, Verfahren zu ihrer Herstellung und Flüssigkristall-Anzeigevorrichtungen

Polariseurs, une méthode pour leur production et dispositifs d'affichage à cristal liquide

(84) Designated Contracting States:
**CH DE FR GB LI**

(30) Priority: **02.03.1990 JP 49347/90**

(43) Date of publication of application:
**04.09.1991 Bulletin 1991/36**

(73) Proprietor: **HITACHI, LTD.**
**Chiyoda-ku, Tokyo 101 (JP)**

(72) Inventors:
- **Imazeki, Shuji, Hitachi Hatoyama Hausu 1-33 Hiki-gun, Saitama-ken (JP)**
- **Tomioka, Yasushi, Hitachi Hatoyamaryo 307 Hiki-gun, Saitama-ken (JP)**
- **Tanaka, Naoki, Hitachi Hatoyamaryo 317 Hiki-gun, Saitama-ken (JP)**
- **Kanetake, Tatsuo, Hitachi Hatoyamaryo 318 Hiki-gun, Saitama-ken (JP)**
- **Kondo, Seiichi, Hitachi Hatoyamaryo 410 Hiki-gun, Saitama-ken (JP)**
- **Taniguchi, Yoshio Hino-shi (JP)**
- **Kondo, Katsumi Katsuta-shi (JP)**
- **Kawakami, Hideaki Chiba-shi (JP)**

(74) Representative:
**Strehl Schübel-Hopf Groening & Partner**
**Maximilianstrasse 54**
**80538 München (DE)**

(56) References cited:
**EP-A- 0 299 384**
**US-A- 3 966 304**

- **PATENT ABSTRACTS OF JAPAN vol. 11, no. 305 (P-623)(2752) 6 October 1987 & JP-A-62 096 905**
- **PATENT ABSTRACTS OF JAPAN vol. 12, no. 427 (P-784)(3274) 11 November 1988 & JP-63 158 525**
- **PATENT ABSTRACTS OF JAPAN vol. 10, no. 38 (P-428)(2095) 14 February 1986 & JP-A-60 184 206**

Remarks:
The file contains technical information submitted after the application was filed and not included in this specification

EP 0 444 703 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

**Description**

BACKGROUND OF THE INVENTION

Field of the Invention

The present invention relates to an optical polarizer patterned with a plural number of portions having a polarizing ability or a direction of polarization, and an optical polarizer containing in the same surface a plural number of portions which are different in polarizing ability or direction of polarization therebetween, a method of producing the same and liquid crystal display devices using the same.

Description of the Prior Art

Conventional methods for producing a patterned polarizer containing in the same surface a plural number of portions which are different in polarizing ability or direction of polarization therebetween are disclosed in Japanese Patent Application Kokai Nos. 54-32342, 54-38142, 60-184206, 63-158525, etc.

(1) The method disclosed in Japanese Patent Application Kokai No. 54-32342 is a method of obtaining a polarizer containing a portion having a polarizing ability and a portion having no polarizing ability in the same surface by firstly producing a polarizer having the same polarizing ability and direction of polarization in the same surface by the usual method, printing with a heat-resistant masking agent on the polarizer by the screen printing technique, and then irradiating the polarizer with infrared rays to remove the polarizing ability from the portion not covered with the masking agent.

(2) The method disclosed in Japanese Patent Application Kokai No. 60-184206 is a method of obtaining a polarizer containing a portion having a polarizing ability and a portion having no polarizing ability in the same surface by producing a polyvinyl alcohol film on a substrate, applying a photoresist film on the film, exposing the film to light through a pattern mask, developing the exposed resist film so as to allow the polyvinyl alcohol film to partially appear, and then dyeing the exposed portion with iodine or a dye in the same manner as in the production of common polarizers to give it a linear polarizing ability.

The method disclosed in Japanese Patent Application Kokai No. 63-158525 is a method of obtaining a polarizer containing in the same surface portions which are different in the direction of polarization therebetween by repeating the above procedure twice and changing the stretching direction of the polyvinyl alcohol film.

(3) The method disclosed in Japanese Patent Application Kokai No. 54-38142 is a method of obtaining a polarizer containing a portion having a polarizing ability and a portion having no polarizing ability in the same surface by partially applying a coloration-preventing agent on a polyvinyl alcohol film by techniques such as screen printing, etc., and then dyeing the uncoated portions with iodine or a dye.

In Japanese Patent Application Kokai No. 64-18470, a method for producing an oriented thin film with polymerizable molecules is disclosed.

EP-A-0 299 384 relates to a process for producing a polydiacetylene molecular orientated film, comprising the following steps:

Forming a diacetylene film on a base using a diacetylene monomer or a polydiacetylene,
unidirectionally rubbing the polydiacetylene film with a cloth at least once,
building up a diacetylene monomer on the film, and a fourth step of polymerizing the diacetylene film formed in the third step in a solid phase,
whereby the second to fourth steps may be carried out once or several times in this order.

SUMMARY OF THE INVENTION

All the prior art described above has a problem of their process being complicated.

An object of the present invention is to provide a method of producing an optical polarizer containing in the same surface a plural number of portions which are different in polarizing ability or direction of polarization therebetween by a simplified process.

A second object of the present invention is to provide an optical polarizer (in the following: "polarizer") containing in the same surface a plural number of portions which are different in polarizing ability or direction of polarization therebetween, produced by such a process.

The third object of the present invention is to provide liquid crystal display devices using such a polarizer.

For these objects, the present invention is intended to simply realize:

(1) a method of producing a patterned polarizer, as defined in claim 1, by (a) producing a surface having a predetermined orientation direction on a substrate, and (b) producing a polymerizable molecular layer comprising polymerizable molecules having an absorption in the region of visible light and in-plane orientation after polymerization on the oriented surface on the above substrate and polymerizing said molecules into a desired pattern having orientation corresponding to the above orientation direction, and
(2) a polarizer as defined in claim 7 containing in the same surface a plural number of portions which are different in polarizing ability or direction of polarization therebetween by repeating this procedure as many times as required.

According to the present invention, a polarizer containing in the same surface a plural number of portions which are different in polarizing ability or direction of polarization therebetween can be obtained by a more simplified manufacturing process than the prior art.

Also, this manufacturing process comprises neither a process of coating with photosensitive resins or masking agents, nor a process of dyeing with iodine or dyes.

Further, patterns of micron order can easily be produced.

In the liquid crystal display device using the polarizer of the present invention, apparent brightness can be improved by giving a polarizing ability to portions alone necessary for display.

Further, it is also possible to let the surface of the substrate of a liquid crystal display device have a polarizing ability. In this case, the surface having a polarizing ability can be produced outside and inside of the device. The conventional polarizers contain iodine, dyes, etc., and because these substances are soluble in the liquid crystal, the surface having a polarizing ability cannot be arranged inside the device. In the polarizer of the present invention, however, the surface having a polarizing ability can be arranged inside the device, and therefore in such a liquid crystal display-device, excellent display quality is obtained because there is little image blurring owing to parallax.

Further, there can be obtained liquid crystal stereoscopic display devices using a polarizer wherein the portions are produced in the form of stripe, and the adjacent portions are different in the direction of polarization axis by 90 degrees therebetween.

## BRIEF DESCRIPTION OF THE DRAWINGS

Fig. 1 is a typical plan view and side view of an apparatus for producing an in-plane oriented monomolecular film used in the present invention at a gas/ liquid interface.

Fig. 2 is a flow sheet for illustrating a procedure to transfer the above monomolecular film to a substrate by the horizontal lifting method.

Fig. 3 is a flow sheet for illustrating a procedure to transfer the above monomolecular film to a substrate by the horizontal dipping method.

Figs. 4 to 7 are flow sheets showing a method for producing the patterned polarizer according to the present invention.

Fig. 8 is a sectional view of the polarizer in one embodiment of the present invention.

Fig. 9 is a diagram showing a pattern of the polarizer in one embodiment of the present invention.

Fig. 10 is a diagram showing a pattern of the polarizer in one embodiment of the present invention.

## DETAILED DESCRIPTION OF THE PREFERRED EMBODIMENTS

A method for producing the polarizer of the present invention will be illustrated specifically.

### First step:

The first step of the process is a step to prepare either one of the following substrates (a) to (c) for an underlying substrate.

(a) a substrate covered with an organic thin film in which the molecules have uniformly been oriented in a particular direction in the film surface (hereinafter referred to as underlying substrate A).
(b) A substrate of which the surface has been directly rubbing-treated in a particular direction (hereinafter referred to as underlying substrate B).
(c) A substrate of which the surface has been covered firstly with an organic thin layer and then rubbing-treated in a particular direction (hereinafter referred to as underlying substrate C).

The organic thin film, in which the molecules have uniformly been oriented in a particular direction in the film surface, used in the underlying substrate A can be produced as follows. First, a trough 1 equipped with movable

compressing barriers 2 and 3 is prepared as shown in Fig. 1. Fig. 1(a) shows a plan view of the trough 1, and Fig. 1 (b) shows a side view (sectional view) thereof. In Fig. 1, arrows 4 and 5 are the movement direction (direction of compression) of the compressing barriers 2 and 3, respectively, 6 is a water surface on which the film-forming molecules are to be spread, 7 is a clean water surface, and 8 is a water phase. First, the barriers 4 and 5 are moved to the left and right ends, respectively, of the trough to enlarge the area of the water surface 6. In this condition, the film-forming molecules, that is, molecules constituting the oriented organic thin film, are spread on the water surface 6 in the form of a monomolecular film. The barriers 4 and 5 are slowly moved toward the right and left, respectively, to compress the spread film on the water surface 6. Movement of the barriers is stopped at a point when the surface pressure of he spread film reaches a definite value. If the film comprises the film-forming substance used in the present invention, the film-forming molecules are uniformly oriented, in this condition, in a particular direction in the film surface. Fig. 1 shows a manner of opposite bidirectional compression of the spread film on the gas/liquid interface, but the same results are also obtained with a manner of unidirectional compression frequently seen in the common LB (Langmuir-Blodgett) film-forming apparatus.

The oriented film produced at the gas/liquid interface by the above procedure can be transferred, without being disturbed in the orientational order and orderness thereof, to a substrate using the lifting method shown in Fig. 2 or the dipping method shown in Fig. 3. In Figs. 2 and 3, numeral 9 designates an oriented film produced on the liquid surface by the above method, numeral 10 designates a substrate, and other numerals are common to those in Fig. 1. In the lifting method, the substrate as held nearly horizontal is slowly moved down as shown in Fig. 2(a), and as soon as its surface is brought into contact with the film on the liquid surface as shown in Fig. 2(b), it is slowly moved up as shown in Fig. 2(c). At that time, the film on the liquid surface is transferred to the substrate. In the dipping method, the substrate as held nearly horizontal is slowly moved down as shown in Fig. 3(a) and further submerged by maintaining it horizontally as shown in Fig. 3(c) even after its surface is brought into contact with the film on the liquid surface as shown in Fig. 3(b). At that time, the film on the liquid surface is transferred to the substrate. The procedure (a) to (c) shown in Fig. 2 or 3 can be repeated in this order as many times as necessary. In this case, as many layers as correspond to the number of repetitions are deposited on the substrate. In any of the lifting method and dipping method, adhesion between the substrate and film can be raised by previous hydrophobic treatment of the substrate surface with silane coupling agents such as hexamethyldisilazane.

In the oriented organic thin film produced at the gas/liquid interface by the above method, the film-forming molecules are usually arranged in in-plane orientation in a direction perpendicular to the direction of compression, and besides the orientation of the molecules is uniform over the whole film surface. Consequently, if the film is produced by the procedure shown in Fig. 2 or 3 with the substrate turned to a desired direction, an oriented film can be produced in which the molecules have been arranged in the same desired in-plane orientation direction in the surface of the substrate.

The rubbing treatment used to produce the underlying substrates B and C refers to unidirectionally rubbing with cloth, etc. the surface of the substrate or organic thin layer covering the substrate. By this treatment, orientation is attained in the direction of rubbing.

The organic thin layer is provided in order to increase the rubbing effect, and thin layers of, for example, polycarbonate, polystyrene, polyvinyl alcohol, polyimide, polytetraphthalate, polystyrene, etc. are used.

Second step:

The second step of the process is the step of producing a polymerizable molecular layer which comprises polymerizable molecules having an absorption in the region of visible light and in-plane orientation after polymerization on the underlying substrate produced in the first step. Formation of the polymerizable molecular layer, although it depends upon the kind of polymerizable molecules, can be attained by using either of techniques commonly used to produce organic thin films such as vacuum evaporation method, molecular beam epitaxy method, dipping method, spraying method, spinner method, casting method, adsorption method, etc.

Third step:

The third step of the process is the step of polymerizing the molecules in the polymerizable molecular layer produced in the second step into a desired pattern using either of techniques with photomasks, laser beams, electron beams, etc. What is important here is that if a compound constituting the polymerizable molecular layer is properly selected, molecular orientational order already formed on the underlying substrate can be given also to the polymerizable molecular layer. In other words, the molecules in the polymerizable molecular layer, after being polymerized, assume in-plane orientation in the same direction as the orientation direction of the underlying substrate.

In the examples of the present invention, the compound used to constitute the polymerizable molecular layer is one that develops a color after polymerization, i.e. has an absorption in the region of visible light. On using such a

compound, the polymerized portion of the film produced by the above method comes to have a polarizing ability to visible light, and besides the axis of polarization agrees with the orientation direction of the underlying substrate.

Fourth step:

The fourth step of the process is the step of removing the portion left unpolymerized in the third step with a solvent which dissolves the unpolymerized portion but not the polymerized portion.

Consequently, if such a process as described above is used, a polarizer can be produced which contains a portion having a polarizing ability and a portion having no polarizing ability in the same surface and besides in which the direction of axis of polarization in the portion having a polarizing ability has been turned to a desired direction.

The process comprising the above four steps is a fundamental process for producing the polarizer of the present invention.

Figs. 4 to 6 show a notional diagram of the above fundamental process. Fig. 4 shows an outline of the process using the underlying substrate A. The substrate is denoted by numeral 10. Numeral 11 in Fig. 4(a) designates an organic thin film oriented in a particular direction in the film surface, and an arrow 12 is the orientation direction of the molecule. Numeral 14 in Fig. 4(b) designates a polymerizable molecular layer (second step). Numeral 15 in Fig. 4(c) designates a produced polymerized portion represented by hatching, and numeral 16 designates an unpolymerized portion (third step). Fig. 4(d) shows a state after removal of the unpolymerized portion (fourth step). In Figs. 4(c) and 4(d), an arrow 17 is the orientation direction of molecules in the polymerized portion, i.e. the direction of the axis of polarization. In Fig. 4, the first step of producing the thin film oriented in a particular direction in the film surface at the gas/liquid interface is omitted. Fig. 5 shows the outline of the process using the underlying substrate B. An arrow 18 in Fig. 5(a) is the direction of rubbing applied to the substrate 10. Fig. 5(b) shows a state wherein the polymerizable molecular layer 14 has been produced (second step). Fig. 5(c) shows a state by hatching wherein the polymerized portion 15 has been produced (third step). Fig. 5(d) shows a state wherein the unpolymerized portion has been removed (fourth step). In Figs. 5(c) and 5(d), an arrow 17 is the orientation direction of molecules in the polymerized portion, i. e. the direction of the axis of polarization.

Fig. 6 shows the outline of the process using the underlying substrate C. An arrow 19 in Fig. 6(a) is the direction of rubbing applied to the organic thin layer 20 on the substrate 10. Fig. 6(b) shows a state wherein the polymerizable molecular layer 14 has been produced (second step). Fig. 6(c) shows a state by hatching wherein the polymerized portion 15 has been produced (third step). Fig. 6(d) shows a state wherein the unpolymerized portion 16 has been removed (fourth step). In Fig. 6(c) and 6(d), an arrow 17 is the orientation direction of molecule in the the polymerized portion, i.e. the direction of the axis of polarization.

By using the process described above, a polarizer containing a portion having a polarizing ability and a portion having no polarizing ability in the same surface is obtained. Consequently, by repeating this process as many times as required, a polarizer containing in the same surface a plural number of portions which are different in polarizing ability therebetween or that containing in the same surface a plural number of portions which are different in the direction of polarization therebetween, can be produced.

Fig. 7 shows one typical embodiment of the process for producing a polarizer containing in the same surface a plural number of portions which are different in the direction of polarization therebetween. Explanation will be given below in the order of steps (a) to (h) in Fig. 7.

(a) The underlying substrate A is prepared as follows. That is, the organic thin film 11 wherein the molecules have been oriented in the direction of an arrow 12 is produced on the substrate 10 [Fig. 7(a)].
(b) The polymerizable molecular layer 14 is produced on the underlying substrate A [Fig. 7(b)].
(c) The polymerizable molecular layer 14 is polymerized into a desired pattern. The polymerized portion 15 is shown by hatching. An arrow 17 is the orientation direction of molecules in the polymerized portion 15, i.e. the direction of the axis of polarization. Numeral 16 designates the unpolymerized portion [Fig. 7(c)].
(d) The unpolymerized portion 16 is removed with a solvent [Fig. 7(d)].
(e) The organic thin film 11' is produced wherein the molecules have been oriented in the direction of an arrow 12' against the surface obtained by the above steps (a) to (d) [Fig. 7(e)].
(f) The polymerizable molecular layer 14' is produced on the organic thin film 11' [Fig. 7(f)].
(g) The polymerizable molecular layer 14' is polymerized into a desired pattern. The polymerized portion 15' is shown by hatching. An arrow 17' is the orientation direction of molecules in the polymerized portion 15', i.e. the direction of the axis of polarization. Numeral 16' designates the unpolymerized portion [Fig. 7(g)].
(h) The unpolymerized portion 16' is removed with a solvent [Fig. 7(h)].

In the embodiment shown in Fig. 7, the steps (a) to (d) and steps (e) to (h) are substantially the same. However, the latter half steps are carried out so that the orientation direction of molecules in the organic thin film 11' is a direction

represented by an arrow 12'; the polymerized portion 15' is not positioned over the polymerized portion 15 produced in the former half steps; and the orientation direction of molecules, shown by an arrow 17', in the polymerized portion 15' is different from that, shown by an arrow 17, in the polymerized portion 15. Thus, as the sectional view of the completed polarizer in Fig. 7(h) shows, a polarizer containing the polymerized portions 15 and 15' of which the axes of polarization are perpendicular to each other, can be produced easily. Fig. 7 shows an example in which the polarization axes of two kinds of portion are perpendicular to each other. If the above method is used, however, the polarization axes of two kinds of portion can be determined so that they form an optional angle. Further, a polarizer containing in the same surface three or more kinds of portion which are different in the direction of polarization axis therebetween, also can be produced by repeating the above steps three times or more.

Further, a polarizer containing in the same surface a plural number of portions which are different in polarizing ability therebetween can also be produced by using an underlying organic thin film of different orientation degree for each polymerizable molecular layer or varying the kind of compound constituting the polymerizable molecular layer for each polymerizable molecular layer and repeating fundamentally the same steps as in Fig. 7.

In the foregoing embodiment, an organic oriented film was used to control the orientation of the polymerizable molecular layer, but the use of this organic oriented film can be replaced by the orientation technique of rubbing used to produce liquid crystal display devices.

All the steps described above are an embodiment for producing a polarizer on one surface alone of the substrate. However, it is also naturally possible as an application of the present invention to produce, on both surfaces of the substrate, the portions which are different in the direction of polarization or polarizing ability therebetween. One example is shown in Fig. 8. That is, the underlying organic thin films 11 and 11' controlling the orientation directions of the polymerized molecular layers are provided at both surfaces of the substrate 10 so that the orientation directions of molecules in both films are different from each other as shown by arrows 12 and 12', respectively, and further, the orientation directions of molecules in the polymerized portions 15 and 15' are made different from each other as shown by arrows 17 and 17', respectively.

Materials for the substrate used in the present invention include, in addition to glass and quartz, plastics such as polyethylene, polypropylene, polyacrylonitrile, polystyrene, polycarbonate, etc.

In the present invention, as examples of a compound which can be used as the film-forming molecule which enables the orientation of molecules to take a definite direction in the film surface by unidirectional or opposite bidirectional compression at the gas/liquid interface, compounds represented by the following formulae (1) to (15) can be given.

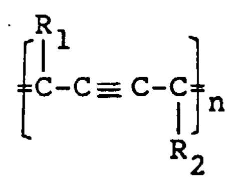

(1)

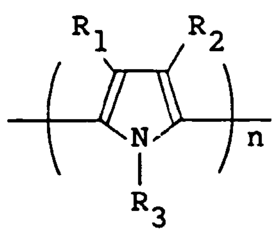

(2)

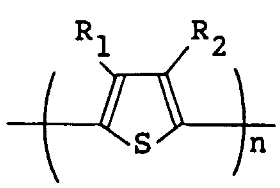

(3)

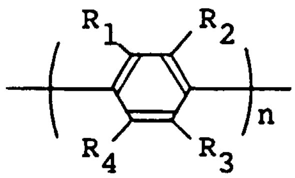

(4)

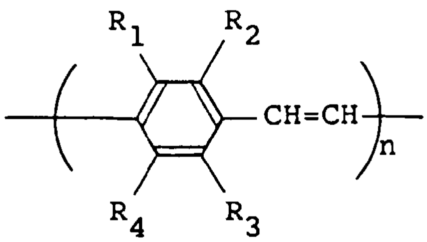

(5)

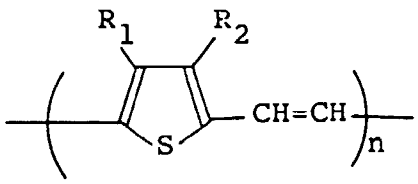

(6)

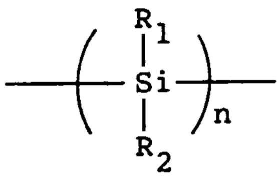

(7)

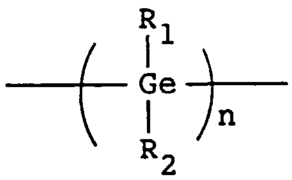

(8)

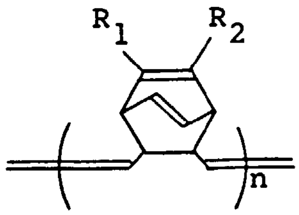

(9)

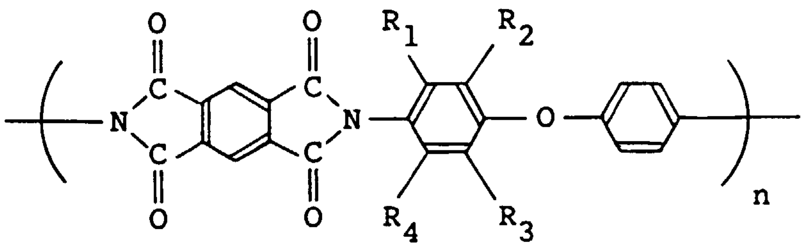

(10)

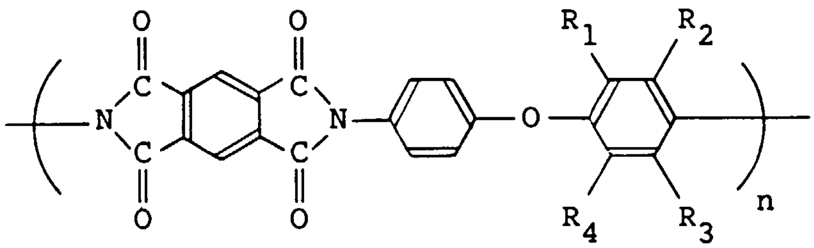

(11)

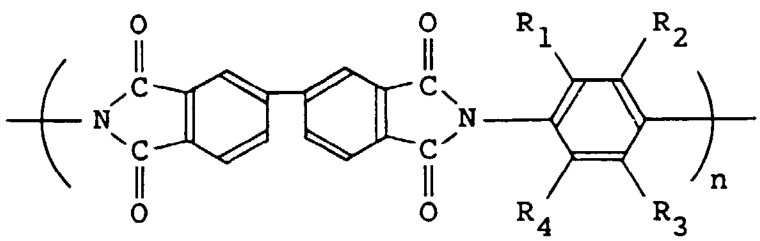

(12)

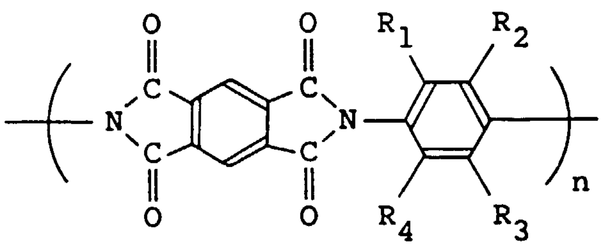

(13)

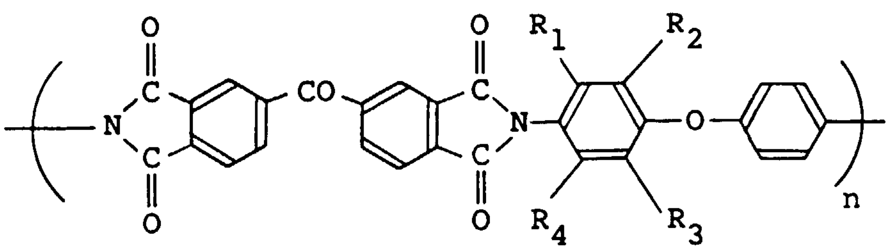

(14)

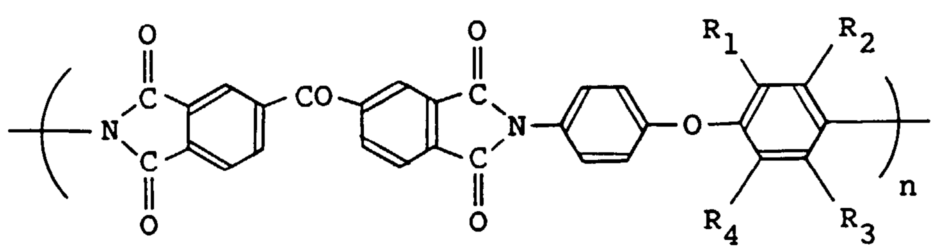

(15)

wherein each of $R_1$, $R_2$, $R_3$ and $R_4$ represents a hydrogen atom or a structure represented by the formula,

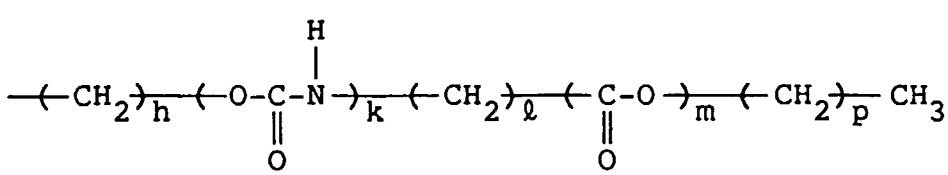

in which h is 2 to 18, k is 0 or 1, ℓ is 1 to 18, m is 0 or 1 and p is 0 to 18, provided that at least one of $R_1$, $R_2$, $R_3$ or $R_4$ contained in the compounds has the structure represented by the above formula.

Among the compounds represented by the formulae (1) to (15), particularly preferred compounds are the following:

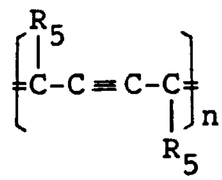

wherein $R_5$ represents a group represented by the formula,

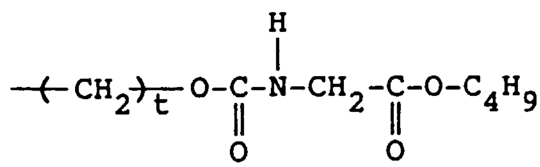

in which t is 2 to 15,

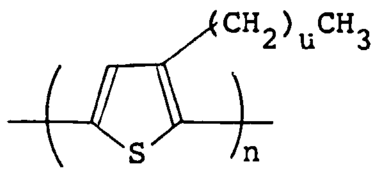

wherein u is 3 to 21, and

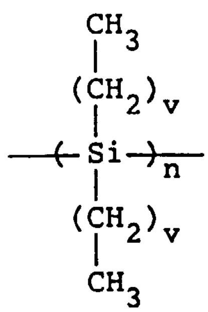

wherein v is 4 to 21.

In the present invention, as an example of the compound usable as one constituting the polymerizable molecular layer, compounds represented by the formula (16) can be given:

$$Y_1 \leftarrow\!\!(X_1)_p\!\!-\!\!(CH_2)_q\!-C \equiv C-C \equiv C-(CH_2)_r\!-\!(X_2)_s\!-Y_2 \qquad (16)$$

wherein each of p and s represents 0 or 1, each of q and r represents either one of integers of 1 to 15, each of $X_1$ and $X_2$ represents either one of $-OSO_2-$, $-SO_2O-$, -OCO-, -COO-, -CONH-, -NHCO-, -OCONH-, -NHCOO-, $-CH_2O-$ or $-OCH_2-$, and each of $Y_1$ and $Y_2$ represents either one of an alkyl group, phenyl group, alkylphenyl group, alkoxyphenyl group, halogenated phenyl group, nitrophenyl group, dinitrophenyl group, carbazolyl group, hydroxy group, carboxy group, anthryl group or alkyloxycarbonylalkyl group.

Among the compounds represented by the formula (16), examples of particularly preferred compounds include the following:

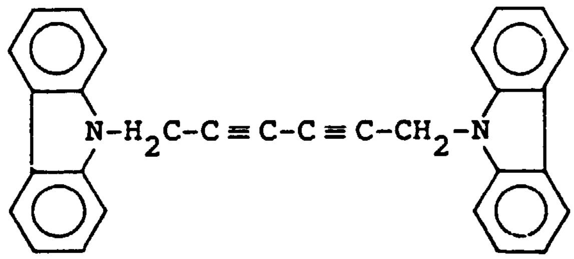

(17)

$C_2H_5NHCOOCH_2\text{-}C\equiv C\text{-}C\equiv C\text{-}CH_2OCONHC_2H_5$ (18)

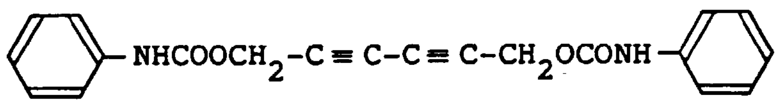

(19)

$C_2H_5NHCOO(CH_2)_4\text{-}C\equiv C\text{-}C\equiv C\text{-}(CH_2)_4OCONHC_2H_5$ (20)

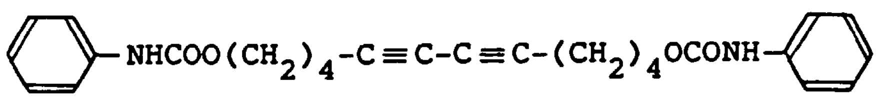

(21)

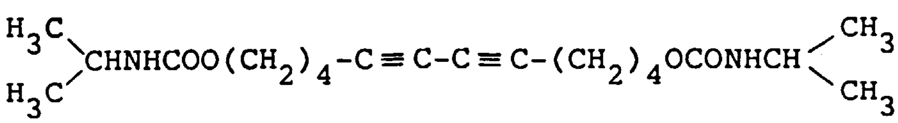

(22)

$C_4H_9OCOCH_2NHCOO(CH_2)_2\text{-}C\equiv C\text{-}C\equiv C\text{-}$

$(CH_2)_2\text{-}OCONHCH_2COOC_4H_9$ (23)

$C_4H_9OCOCH_2NHCOO(CH_2)_3\text{-}C\equiv C\text{-}C\equiv C\text{-}$

$(CH_2)_3\text{-}OCONHCH_2COOC_4H_9$ (24)

$C_4H_9OCOCH_2NHCOO(CH_2)_4\text{-}C\equiv C\text{-}C\equiv C\text{-}$

$(CH_2)_4\text{-}OCONHCH_2COOC_4H_9$ (25)

$C_4H_9OCOCH_2NHCOO(CH_2)_5\text{-}C\equiv C\text{-}C\equiv C\text{-}$

$(CH_2)_5\text{-}OCONHCH_2COOC_4H_9$ (26)

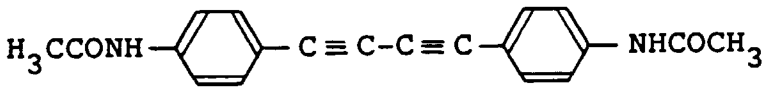

(27)

$$H_3C(CH_2)_8OCOCH_2\text{-}C{\equiv}C\text{-}C{\equiv}C\text{-}CH_2COO(CH_2)_8CH_3 \quad (28)$$

That the in-plane orientational order of molecules in the underlying film is given to the overlying layer, i.e. the polymerizable molecular layer after polymerization, is described in detail in a copending U.S. Patent Application Serial No. 07/584971 already applied for by the present inventors.

The present invention will be illustrated more specifically with reference to the following example,s but the present invention is not to be interpreted as being limited thereto.

Example 1

A 0.5 g/ℓ chloroform solution of a polydiacetylene derivative represented by the formula (29) (hereinafter referred to as p-3BCMU),

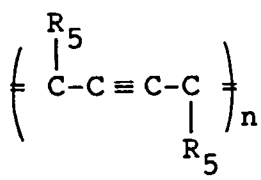

(29)

wherein $R_5$ represents a substituent,

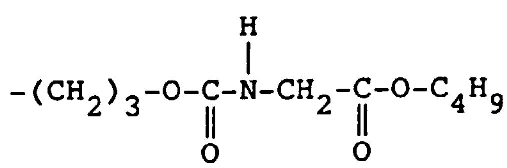

was prepared, and this solution was added dropwise to the surface of pure water in the LB film-manufacturing apparatus shown in Fig. 1. After chloroform vaporized, the compressing barriers were slowly moved in two directions facing each other, as shown in Fig. 1, to compress the spread p-3BCMU film on the water surface. At the point when the surface pressure of the film reached 20 mN/m, the compressing barriers were stopped, and the in-plane orientational order of the p-3BCMU monomolecular film produced on the water surface was evaluated by measuring the polarization reflection spectrum. The measurement with polarized light was carried out by employing linearly polarized light vertically incident on the film on the water surface. As a result, it was found that the intensity of reflection was maximum and minimum when the direction of polarization was perpendicular (⊥) to the parallel (//) to the compression direction, respectively. From this result, it became clear that the principal chain of the p-3BCMU molecules has been oriented perpendicular to the compression direction in the surface of the above monomolecular film. Also, it was found that, since this polarization characteristic does not show in-plane position dependency, the principal chain of the molecules has been oriented in the same direction and uniformly over the whole p-3BCMU monomolecular film (film area, about 60 $cm^2$) formed on the water surface. Further, it was found that the dichroic ratio at about 620 nm of this film was about 20 from the above spectrum.

The oriented film of p-3BCMU thus produced on the water surface was transferred by only one layer to a transparent glass substrate previously subjected to hydrophobic treatment with hexamethyldisilazane, by the lifting method shown in Fig. 2. It was found that the transferred p-3BCMU film kept its orientational order even on the glass substrate.

Onto the organic thin film of p-3BCMU thus produced on the transparent glass substrate was deposited a diacetylene derivative represented by the formula (17) (hereinafter referred to as DCH) by the vacuum evaporation method. Thus, a polymerizable molecular layer of about 1000 Å in thickness comprising the diacetylene derivative monomer

was obtained.

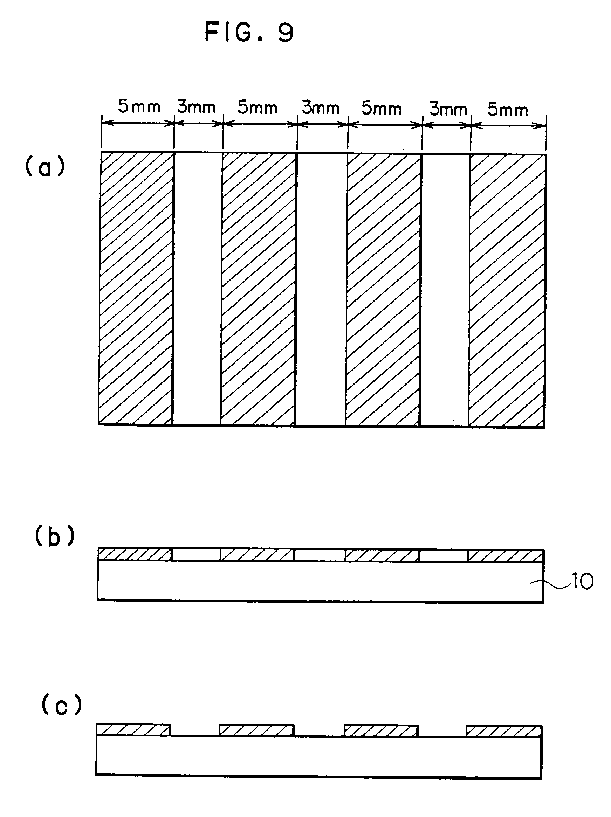

A photomask was applied to this polymerizable molecular layer and irradiated with ultraviolet rays from a mercury lamp to form a stripe-form polymerized pattern of 5 mm in width and 3 mm in interval on the film surface, as shown in Figs. 9(a) and 9(b). Fig. 9(a) shows a plan view, and Fig. 9(b) shows a sectional view in which the shaded parts show the polymerized portion.

Next, this film was immersed in acetone together with the substrate to dissolve the unpolymerized monomer portion. Thus, a patterned film shown by the sectional view in Fig. 9(c) was obtained. The polarization absorption spectrum of the polymerized portion was measured to find that the direction of polarization maximizing the intensity of absorption resulting from the polymer main chain agreed with the orientation direction of molecules in the p-3BCMU monomolecular film used for the underlying organic thin film. In other words, it was found that the main chain of the DCH polymer produced by polymerization has been oriented in the same direction as that of the polymer main chain of the p-3BCMU monomolecular film which was the underlying organic thin film. The dichroic ratio of the polymerized portion obtained by the measurement of polarization absorption spectrum was about 5 at 650 nm, from which it was found that the polymerized portion had a polarizing ability.

From the results, it was found that a patterned polarizer containing a portion having a polarizing ability and a portion having no polarizing ability in the same surface can be produced by the method of the present invention. Coloration of the p-3BCMU monomolecular film used as the underlying organic thin film was extremely too slight to become a problem in practical use.

Example 2

Onto the p-3BCMU monomolecular film produced as the underlying organic thin film on a glass substrate in the same manner as in Example 1 was vacuum-deposited each of diacetylene derivatives shown in Table 1 to produce a polymerizable molecular layer of about 1000 Å in thickness. Thereafter, the same polymerized pattern as in Example 1 was formed on each polymerizable molecular layer by the same process as in Example 1. The dichroic ratio of the polymerized portion obtained by the measurement of polarization absorption spectrum (at 550 nm) is shown in Table 1 for each diacetylene derivative used for deposition. In either case, the polymerized portion was found to be usable as the patterned polarizer.

Table 1

| No. | Compound | Dichroic ratio |
|---|---|---|
| 1 | Formula (18) | 7 |
| 2 | Formula (19) | 5 |
| 3 | Formula (20) | 6 |
| 4 | Formula (21) | 5 |
| 5 | Formula (22) | 4 |
| 6 | Formula (23) | 6 |
| 7 | Formula (24) | 6 |
| 8 | Formula (25) | 6 |
| 9 | Formula (26) | 5 |
| 10 | Formula (27) | 4 |
| 11 | Formula (28) | 4 |

Example 3

The oriented monomolecular film of a polydiacetylene derivative represented by the formula (30) (hereinafter referred to as p-4BCMU),

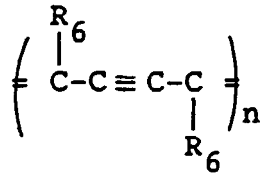

(30)

wherein $R_6$ represents a substituent,

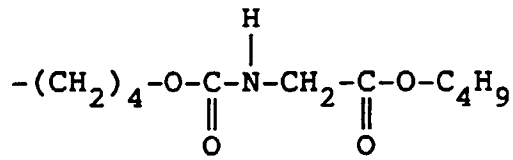

was produced as the underlying organic thin film on a glass substrate in completely the same manner as in Example 1. Thereafter, onto the above oriented monomolecular film was deposited a polymerizable molecular layer of about 1000 Å in thickness comprising a diacetylene derivative represented by the formula (24) by the vacuum evaporation method. This polymerizable molecular layer was formed into the same polymerized pattern as in Example 1 by completely the same process as in Example 1. The dichroic ratio of the polymerized portion obtained by measurement of polarization absorption spectrum was about 4, from which it was found that the film of this Example can be used as the patterned polarizer.

Example 4

A chloroform solution of a mixture of a polythiophene derivative represented by the formula (31) (hereinafter referred to as PHDT),

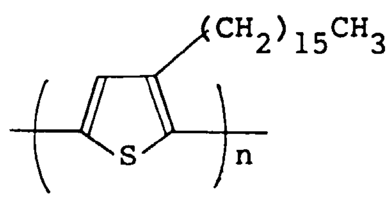

(31)

and p-3BCMU in a 1:1 molar ratio was prepared. The oriented monomolecular film of the mixture was produced on the water surface in completely the same manner as in Example 1, and transferred to a glass substrate by the lifting method to obtain the underlying organic thin film. Onto this film was vacuum-deposited DCH to produce a polymerizable molecular layer of about 1000 Å in thickness. This polymerizable molecular layer was formed into the same polymerized pattern as in Example 1 by completely the same process as in Example 1. The dichroic ratio of the polymerized portion obtained by the measurement of polarization absorption spectrum was about 4, from which it was found that the film of this Example can be used as the patterned polarizer.

Example 5

A chloroform solution of a mixture of polydihexylsilane represented by the formula (32),

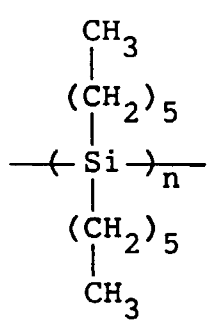

(32)

and p-3BCMU in a 1:1 molar ratio was prepared. The oriented monomolecular film of the mixture was produced on the water surface in completely the same manner as in Example 1, and transferred to a glass substrate by the lifting method to obtain the underlying organic thin film. Onto this film was vacuum-deposited DCH to produce a polymerizable molecular layer of about 1000 Å in thickness. This polymerizable molecular layer was formed into the same polymerized pattern as in Example 1 by completely the same process as in Example 1. The dichroic ratio of the polymerized portion obtained by the measurement of polarization absorption spectrum was 5, from which it was found that the film of this Example can be used as the patterned polarizer.

Example 6

A 0.4 wt.% chlorophenol solution of polyethylene terephthalate was spinner-coated onto a glass substrate, and chlorophenol was volatilized by heating to produce an organic thin layer of polyethylene terephthalate. The surface of this layer was repeatedly rubbed in one direction with silicone cloth to apply rubbing treatment thereto. Onto this layer was vacuum-deposited DCH to produce a polymerizable molecular layer of about 1000 Å in thickness. This polymerizable molecular layer was formed into the same polymerized pattern as in Example 1 by completely the same process as in Example 1. The dichroic ratio of the polymerized portion obtained by the measurement of polarization absorption spectrum was 10, from which it was found that the film of this Example can be used as the patterned polarizer.

Example 7

4,4'-Diaminodiphenyl ether represented by the formula (33) and pyromellitic acid dianhydride represented by the formula (34) were polymerized in N-methyl-2-pyrrolidone to obtain a polyamide acid varnish:

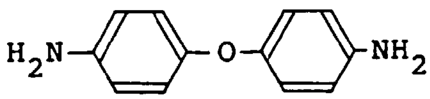

(33)

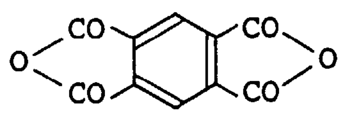

(34)

This polyamide acid varnish was spinner-coated onto a glass substrate and baked at 300°C to produce the organic thin layer of polyimide. The surface of this layer was repeatedly rubbed in one direction with silicone cloth to apply rubbing treatment thereto. Onto this layer was vacuum-deposited a diacetylene derivative represented by the formula (24) to produce the polymerizable molecular layer of about 1000 Å in thickness. This polymerizable molecular layer was formed into the same polymerized pattern as in Example 1 by the same process as in Example 1. The dichroic ratio of the polymerized portion obtained by the measurement of polarization absorption spectrum was 8, from which it was found that the film of this Example can be used as the patterned polarizer.

Example 8

A 0.1 wt.% ethanol solution of a diacetylene compound represented by the formula (21) was applied by the casting method onto the oriented monomolecular film of p-3BCMU produced on a glass substrate in the same manner as in Example 1, and ethanol was volatilized. The polymerizable molecular layer thus obtained was formed into the same polymerized pattern as in Example 1 by the same process as in Example 1. The dichroic ratio of the polymerized portion obtained by the measurement of polarization absorption spectrum was 6, from which it was found that the film of this Example can be used as the patterned polarizer.

Example 9

In the same manner as in Example 1, the oriented monomolecular film of p-3BCMU was produced as the underlying organic thin film on a glass substrate. Onto this oriented monomolecular film was deposited DCH by the vacuum evaporation method to produce the polymerizable molecular layer of about 700 Å in thickness. This layer was polymerized into the form of a stripe of 3 mm in width and 3 mm in interval in the same manner as in Example 1, and the unpolymerized portion was removed with acetone [Figs. 7(a) to 7(d)]. Onto the patterned polarizing film thus produced was once more deposited the oriented monomolecular film of p-3BCMU as the second organic thin film so that the orientation direction of the second thin film formed an angle of 90 degrees with that of the firstly produced organic thin film [Fig. 7(e)]. Onto this second thin film was further vacuum-deposited DCH to produce the polymerizable molecular layer of about 700 Å in thickness [Fig. 7(f)]. The polymerizable molecular layer thus produced was polymerized into the form of stripe of 3 mm in width and 3 mm in interval in the same manner as in Example 1. In this case, however, the second vacuum deposition of DCH was carried out so that the portion to be polymerized was not positioned over the polymerized portion firstly produced. The unpolymerized portion was removed to produce a polarizer having a section structure typically shown in Fig. 7(h). Thus, a polarizer was produced which comprised a plural number of

portions arranged in the form of stripe, and in which the directions of polarization axis were different by an angle of 90 degrees between the adjacent portions.

Further, the same method as above was carried out using the substrate having the rubbing-treated organic thin layer shown in Example 6. As a result, the same polarizer as above containing portions which were different in the direction of polarization axis by 90 degrees therebetween, was obtained.

Example 10

Such a patterned polarizer as shown in Fig. 10 was produced on a glass substrate with an ITO electrode pattern, using the same materials and method as in Example 1. In Fig. 10, the shaded portion shows a portion having a polarizing ability and the unshaded portion shows a portion having no polarizing ability. The size of one portion was made 500 microns in length and 500 microns in width. Onto this polarizer were deposited two molecular layers of the p-3BCMU monomolecular film so that the orientation direction of the monomolecular film agreed with the direction of polarization axis of the polarizer. One more piece of the same substrate was prepared. These two substrates were faced each other through a spacer of 8 μm so that their surfaces having the deposited film were turned inward and the direction of polarization axis of one polarizer formed an angle of 90 degrees with that of the other one. Thus, a liquid crystal device was obtained. A nematic liquid crystal marketed under the trade name of ZLI-1132 from Merk Co. was put into this liquid crystal device. It was found that the liquid crystal display device thus obtained showed a bright background and a good display quality as compared with the conventional liquid crystal display devices containing a twist-nematic liquid crystal.

Using two pieces polarizer prepared in each of Examples 1 to 9, liquid crystal display devices were produced in the same manner as above. As a result, every liquid crystal display device showed a bright and good display quality.

## Claims

1. A method of producing an optical polarizer patterned with a plural number of portions having a polarizing ability or direction of polarization comprising a first step of producing a molecular layer orienting surface (11, 20), of predetermined orienting direction (12, 18, 19), on a substrate (10), a second step of producing on the above surface (11, 20) a polymerizable molecular layer (14) comprising polymerizable molecules which after polymerization have an absorption in the region of visible light and assume in-plane orientation, a third step of polymerizing the molecules in said polymerizable molecular layer (14) into a desired pattern (15, 16) and a fourth step of removing the unpolymerized portion (16) of said polymerizable molecular layer (14).

2. A method of producing an optical polarizer according to claim 1, wherein the polarizer has in the same surface a plural number of portions which are different in polarizing ability or direction of polarization, which additionally comprises the step of repeating the first step to fourth step as many times as required with the orientation direction varied.

3. A method of producing an optical polarizer according to claim 1 or 2, wherein in said first step organic molecules are spread at a gas/liquid interface (6) and compressed unidirectionally or in two directions (4, 5) facing each other to orient the organic molecules in a desired direction, and the oriented organic molecules (9) are transferred to a substrate (10).

4. A method of producing an optical polarizer according to claim 1 or 2, wherein in said first step a rubbing treatment is applied to the substrate (10).

5. A method of producing an optical polarizer according to any one of claims 1 to 4, wherein the molecules in said polymerizable molecular layer (9, 14, 14') comprise at least one diacetylene derivative.

6. A method of producing an optical polarizer according to claim 5, wherein said diacetylene derivative is at least one member-selected from the group consisting of:

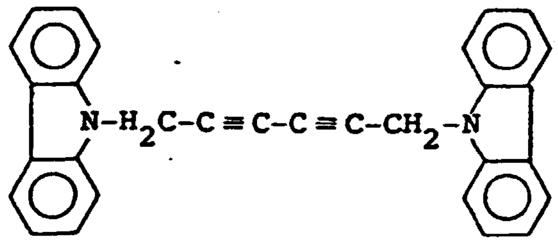
,

$C_2H_5NHCOOCH_2\text{-}C\equiv C\text{-}C\equiv C\text{-}CH_2OCONHC_2H_5$ ,

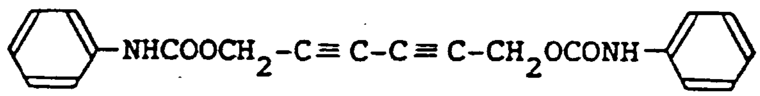
,

$C_2H_5NHCOO(CH_2)_4\text{-}C\equiv C\text{-}C\equiv C\text{-}(CH_2)_4OCONHC_2H_5$ ,

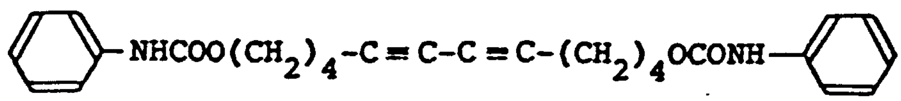
,

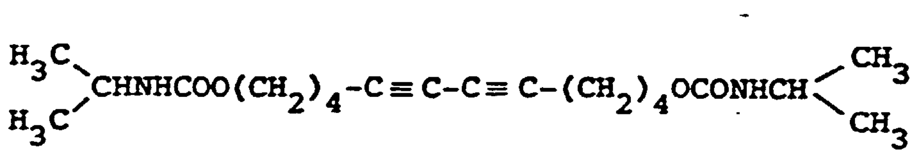
,

$C_4H_9OCOCH_2NHCOO(CH_2)_2\text{-}C\equiv C\text{-}C\equiv C\text{-}$

$(CH_2)_2\text{-}OCONHCH_2COOC_4H_9$ ,

$C_4H_9OCOCH_2NHCOO(CH_2)_3\text{-}C\equiv\text{-}C\text{-}C\equiv C\text{-}$

$(CH_2)_3\text{-}OCONHCH_2COOC_4H_9$,

$C_4H_9OCOCH_2NHCOO(CH_2)_4\text{-}C\equiv C\text{-}C\equiv C\text{-}$

$(CH_2)_4\text{-}OCONHCH_2COOC_4H_9$,

$C_4H_9OCOCH_2NHCOO(CH_2)_5\text{-}C\equiv C\text{-}C\equiv C\text{-}$

$(CH_2)_5\text{-}OCONHCH_2COOC_4H_9$,

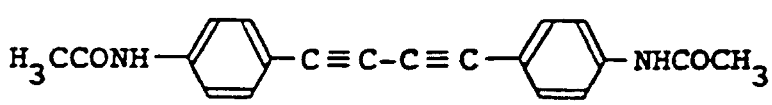

and

$H_3C(CH_2)_8OCOCH_2\text{-}C\equiv C\text{-}C\equiv C\text{-}CH_2COO(CH_2)_8CH_3$.

7. An optical polarizer patterned with a plural number of portions having a polarizing ability or direction of polarization, which comprises a substrate (10) having a molecular layer orienting surface (11,20) of pre-determined orienting direction (12, 18, 19), and a polymerized molecular layer (14) derived from polymerizable molecules which after polymerization have an absorption in the region of visible light and assume in-plane orientation, said layer having been produced on the above surface (11, 20) and polymerized into a desired pattern (15, 16) and from which the unpolymerized portion (16) has been removed.

8. An optical polarizer according to claim 7, which comprises an additional molecular layer orienting surface (11') of pre-determined orienting direction (12') which has been produced on the polymerized molecular layer (14) and an additional polymerized molecular layer (14') derived from polymerizable molecules which after polymerization have an absorption in the region of visible light and assume in-plane orientation and which has been produced on this surface (11') and polymerized into a desired pattern (15', 16') and from which the unpolymerized portion (16') has been removed, the polymerized molecular layers (14, 14') being different in polarizing ability or direction (12, 12') of polarization therebetween.

9. A polarizer according to claim 7 or 8, wherein said orienting surface is produced by applying rubbing treatment to the substrate.

10. A polarizer according to claim 7 or 8, wherein the orienting surface is produced by spreading organic molecules at a gas/liquid interface (6), compressing the spread molecules unidirectionally or in two directions (4, 5) facing each other to orient the molecules in a desired direction and then transferring the oriented organic molecules (9) to the substrate (10).

11. A liquid crystal display device comprising an optical polarizer and a liquid crystal cell, characterized in that said optical polarizer is that of claim 7 or claim 8.

12. A liquid crystal display device according to claim 11, characterized in that said optical polarizer is attached to said liquid crystal cell at the outside thereof.

13. A liquid crystal display device according to claim 11, characterized in that said optical polarizer is arranged inside said liquid crystal cell.

**Patentansprüche**

1. Verfahren zur Herstellung eines optischen Polarisators, der mit einem Muster einer Vielzahl von Anteilen mit einer Polarisationsfähigkeit oder einer Polarisationsrichtung versehen ist, das umfaßt:

   eine erste Stufe, in der eine Oberfläche (11, 20) zur Orientierung molekularer Schichten mit vorbestimmter Orientierungsrichtung (12, 18, 19) auf einem Träger (10) hergestellt wird,
   eine zweite Stufe, in der auf der Oberfläche (11, 20) eine polymerisierbare molekulare Schicht (14) hergestellt wird, die polymerisierbare Moleküle aufweist, die nach der Polymerisation eine Absorption im Bereich des sichtbaren Lichts besitzen und eine Orientierung in der Ebene (in-plane Orientation) einnehmen,
   eine dritte Stufe, in der die Moleküle der polymerisierbaren molekularen Schicht (14) in ein gewünschtes Muster (15, 16) polymerisiert werden und
   eine vierte Stufe, in der der nicht polymerisierte Anteil (16) der polymerisierbaren molekularen Schicht (14) entfernt wird.

2. Verfahren zur Herstellung eines optischen Polarisators gemäß Anspruch 1, wobei der Polarisator in der gleichen Oberfläche eine Vielzahl von Anteilen, die bezüglich der Polarisationsfähigkeit oder der Polarisationsrichtung verschieden voneinander sind, aufweist, das zusätzlich eine Stufe aufweist, in der die erste bis vierte Stufe so oft wie nötig mit jeweils geänderter Orientierungsrichtung wiederholt wird.

3. Verfahren zur Herstellung eines optischen Polarisators gemäß Anspruch 1 oder 2, wobei in der ersten Stufe die organischen Moleküle auf einer Gas/Flüssigkeit-Grenzfläche (6) gespreitet und in einer Richtung oder in zwei sich gegenüberliegende Richtungen (4, 5) zusammengedrückt werden, wobei die organischen Moleküle in eine gewünschte Richtung orientiert werden, und die orientierten organischen Moleküle (9) auf einen Träger (10) übertragen werden.

**4.** Verfahren zur Herstellung eines optischen Polarisators gemäß Anspruch 1 oder 2, wobei in der ersten Stufe der Träger (10) einer Reibbehandlung unterzogen wird.

**5.** Verfahren zur Herstellung eines optischen Polarisators gemäß einem der Ansprüche 1 bis 4, wobei die Moleküle der polymerisierbaren molekularen Schicht (9, 14, 14') mindestens ein Diacetylen-Derivat enthalten.

**6.** Verfahren zur Herstellung eines optischen Polarisators gemäß Anspruch 5, worin das Diacetylen-Derivat mindestens eines ist, das aus der Gruppe bestehend aus

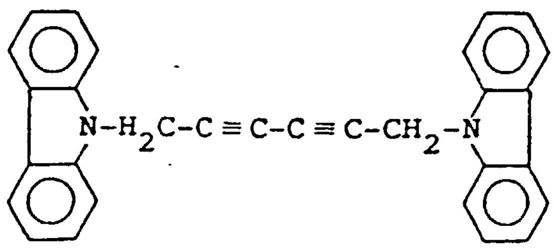 ,

$C_2H_5NHCOOCH_2\text{-}C{\equiv}C\text{-}C{\equiv}C\text{-}CH_2OCONHC_2H_5$,

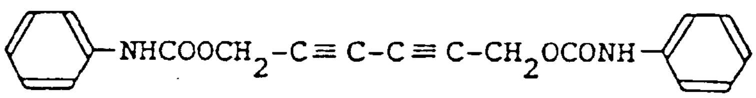 ,

$C_2H_5NHCOO(CH_2)_4\text{-}C{\equiv}C\text{-}C{\equiv}C\text{-}(CH_2)_4OCONHC_2H_5$,

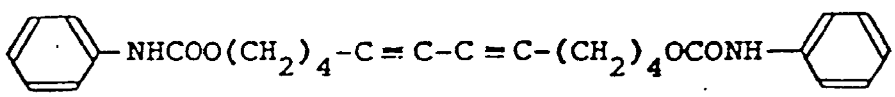 ,

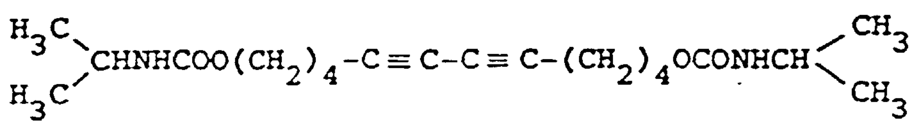 ,

$C_4H_9OCOCH_2NHCOO(CH_2)_2\text{-}C{\equiv}C\text{-}C{\equiv}C\text{-}$

$(CH_2)_2\text{-}OCONHCH_2COOC_4H_9$,

$C_4H_9OCOCH_2NHCOO(CH_2)_3\text{-}C{\equiv}C\text{-}C{\equiv}C\text{-}$

$(CH_2)_3\text{-}OCONHCH_2COOC_4H_9$,

$C_4H_9OCOCH_2NHCOO_2(CH_2)_4\text{-}C{\equiv}C\text{-}C{\equiv}C\text{-}$

$(CH_2)_4\text{-}OCONHCH_2COOC_4H_9$ ,

$C_4H_9OCOCH_2NHCOO(CH_2)_5\text{-}C{\equiv}C\text{-}C{\equiv}C\text{-}$

$(CH_2)_5\text{-}OCONHCH_2COOC_4H_9$,

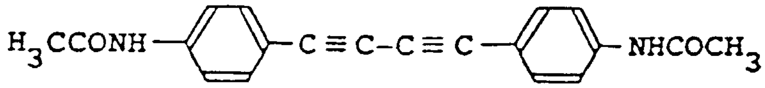

und

$$H_3C(CH_2)_8OCOCH_2\text{-}C\equiv C\text{-}C\equiv C\text{-}CH_2COO(CH_2)_8CH_3$$

ausgewählt wird.

**7.** Ein mit einer Vielzahl von Anteilen, die eine Polarisationsfähigkeit oder eine Polarisationsrichtung aufweisen, gemusterter optischer Polarisator, der einen Träger (10) mit einer Oberfläche (11, 20) zur Orientierung molekularer Schichten mit vorbestimmter Orientierungsrichtung (12, 18, 19) und eine polymerisierte molekulare Schicht (14), die von polymerisierbaren Molekülen, die nach der Polymerisation eine Absorption im Bereich des sichtbaren Lichts aufweisen und eine Orientierung in der Ebene einnehmen, abgeleitet ist, umfaßt, wobei die Schicht auf der Oberfläche (11, 20) hergestellt und in ein gewünschtes Muster (15, 16) polymerisiert wurde, und von der der nicht polymerisierte Anteil (16) entfernt wurde.

**8.** Optischer Polarisator gemäß Anspruch 7, der eine zusätzliche Oberfläche (11') zur Orientierung molekularer Schichten mit vorbestimmter Orientierungsrichtung (12'), die auf der polymerisierten molekularen Schicht (14) hergestellt wurde, und eine zusätzliche polymerisierte molekulare Schicht (14') umfaßt, die aus polymerisierbaren Molekülen, die nach der Polymerisation einer Absorption im Bereich des sichtbaren Lichts aufweisen und eine Orientierung in der Ebene einnehmen, abgeleitet ist, und die auf dieser Oberfläche (11') hergestellt wurde, in ein gewünschtes Muster (15', 16') polymerisiert wurde, und von der der nicht polymerisierte Anteil (16') entfernt wurde, wobei die polymerisierten molekularen Schichten (14, 14') bezüglich der Polarisationsfähigkeit oder Polarisationsrichtung (12, 12') verschieden voneinander sind.

**9.** Polarisator gemäß Anspruch 7 oder 8, worin die Oberfläche zur Orientierung hergestellt wird, indem der Träger einer Reibbehandlung unterzogen wird.

**10.** Polarisator gemäß Anspruch 7 oder 8, worin die Oberfläche zur Orientierung durch Spreiten organischer Moleküle auf einer Gas/Flüssigkeit-Grenzfläche (6), Zusammendrücken der gespreiteten Moleküle in einer Richtung oder in zwei sich gegenüberliegende Richtungen (4, 5), wobei die Moleküle in eine gewünschte Richtung orientiert werden, und anschließendes Übertragen der orientierten organischen Moleküle (9) auf den Träger (10) hergestellt wird.

**11.** Flüssigkristall-Anzeigevorrichtung, die einen optischen Polarisator und eine Flüssigkristall-Zelle aufweist, und dadurch gekennzeichnet ist, daß der optische Polarisator derjenige gemäß Anspruch 7 oder 8 ist.

**12.** Flüssigkristall-Anzeigevorrichtung gemäß Anspruch 11, dadurch gekennzeichnet, daß der optische Polarisator an der Außenseite der Flüssigkristall-Zelle angebracht ist.

**13.** Flüssigkristall-Anzeigevorrichtung gemäß Anspruch 11, dadurch gekennzeichnet, daß der optische Polarisator im Inneren der Flüssigkristall-Zelle angeordnet ist.

## Revendications

**1.** Procédé de fabrication d'un polariseur optique comportant plusieurs parties ayant une capacité polarisante ou direction de polarisation, comprenant une première étape consistant à produire une surface d'orientation à couche moléculaire (11, 20), à direction d'orientation (12, 18, 19) prédéterminée, sur un substrat (10), une deuxième étape consistant à produire, sur la surface (11, 20) ci-dessus, une couche moléculaire polymérisable (14) comprenant des molécules polymérisables qui, après polymérisation, ont une absorption dans la région de la lumière visible et prennent une orientation dans un même plan, une troisième étape consistant à polymériser les molécules dans ladite couche moléculaire polymérisable (14), en un motif (15, 16) souhaité, et une quatrième étape consistant à enlever la partie non polymérisée (16) de ladite couche moléculaire polymérisable (14).

**2.** Procédé de fabrication d'un polariseur optique selon la revendication 1, dans lequel le polariseur a, dans la même surface, plusieurs parties qui ont une capacité polarisante ou direction de polarisation différente, qui comprend en plus l'étape consistant à répéter la première étape à la quatrième étape autant de fois que nécessaire, en faisant varier la direction d'orientation.

**3.** Procédé de fabrication d'un polariseur optique selon la revendication 1 ou 2, dans lequel, dans ladite première étape, des molécules organiques sont étalées à une interface gaz/liquide (6) et sont comprimées dans une ou

dans deux directions (4, 5) se faisant face pour orienter les molécules organiques dans une direction souhaitée, et les molécules organiques orientées (9) sont transférées à un substrat (10).

4. Procédé de fabrication d'un polariseur optique selon la revendication 1 ou 2, dans lequel, dans ladite première étape, un traitement de frottement est appliqué au substrat (10).

5. Procédé de fabrication d'un polariseur optique selon l'une quelconque des revendications 1 à 4, dans lequel les molécules dans ladite couche moléculaire polymérisable (9, 14, 14') comprennent au moins un dérivé de diacétylène.

6. Procédé de fabrication d'un polariseur optique selon la revendication 5, dans lequel ledit dérivé de diacétylène est au moins un élément choisi dans le groupe constitué de :

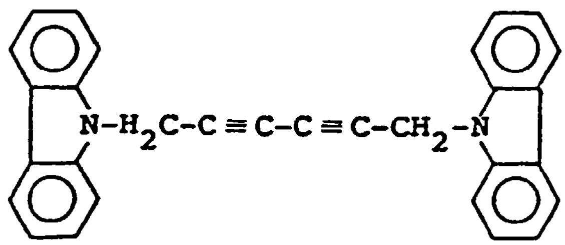 ,

$C_2H_5NHCOOCH_2\text{-}C{\equiv}C\text{-}C{\equiv}C\text{-}CH_2OCONHC_2H_5$ ,

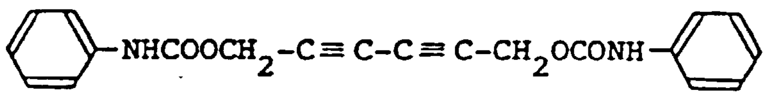 ,

$C_2H_5NHCOO(CH_2)_4\text{-}C{\equiv}C\text{-}C{\equiv}C\text{-}(CH_2)_4OCONHC_2H_5$,

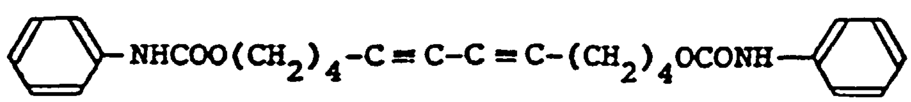 ,

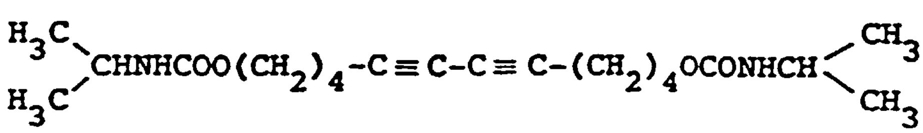 ,

$C_4H_9OCOCH_2NHCOO(CH_2)_2\text{-}C{\equiv}C\text{-}C{\equiv}C\text{-}$

$(CH_2)_2\text{-}OCONHCH_2COOC_4H_9$ ,

$C_4H_9OCOCH_2NHCOO(CH_2)_3\text{-}C{\equiv}C\text{-}C{\equiv}C\text{-}$

$(CH_2)_3\text{-}OCONHCH_2COOC_4H_9$ ,

$C_4H_9OCOCH_2NHCOO(CH_2)_4\text{-}C{\equiv}C\text{-}C{\equiv}C\text{-}$

$(CH_2)_4\text{-}OCONHCH_2COOC_4H_9$ ,

$C_4H_9OCOCH_2NHCOO(CH_2)_5\text{-}C{\equiv}C\text{-}C{\equiv}C\text{-}$

$(CH_2)_5$-$OCONHCH_2COOC_4H_9$ ,

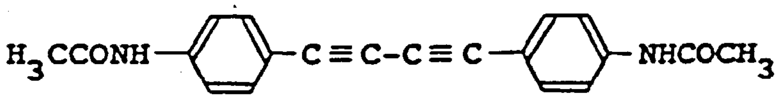

et

$H_3C(CH_2)_8OCOCH_2$-C≡C-C≡C-$CH_2COO(CH_2)_8CH_3$.

**7.** Polariseur optique comportant plusieurs parties ayant une capacité polarisante ou direction de polarisation, qui comprend un substrat (10) ayant une surface d'orientation à couche moléculaire (11, 20) à direction d'orientation (12, 18, 19) prédéterminée, et une couche moléculaire polymérisée (14) dérivée de molécules polymérisables qui, après polymérisation, ont une absorption dans la région de la lumière visible et prennent une orientation dans un même plan, ladite couche ayant été produite sur la surface (11, 20) ci-dessus et polymérisée en un motif (15, 16) souhaité, et dont la partie non polymérisée (16) a été enlevée.

**8.** Polariseur optique selon la revendication 7, qui comprend une surface d'orientation à couche moléculaire supplémentaire (11') à direction d'orientation (12') prédéterminée, qui a été produite sur la couche moléculaire polymérisée (14), et une couche moléculaire polymérisée supplémentaire (14') dérivée de molécules polymérisables qui, après polymérisation, ont une absorption dans la région de la lumière visible et prennent une orientation dans un même plan, et qui a été produite sur cette surface (11') et polymérisée en un motif (15', 16') souhaité et dont la partie non polymérisée (16') a été enlevée, les couches moléculaires polymérisées (14, 14') ayant une capacité polarisante ou direction de polarisation (12, 12') différentes entre elles.

**9.** Polariseur selon la revendication 7 ou 8, dans lequel ladite surface d'orientation est produite en appliquant un traitement de frottement au substrat.

**10.** Polariseur selon la revendication 7 ou 8, dans lequel la surface d'orientation est produite en étalant des molécules organiques à une interface gaz/liquide (6), en comprimant les molécules étalées dans une ou dans deux directions (4, 5) se faisant face pour orienter les molécules dans une direction souhaitée, puis en transférant les molécules organiques orientées (9) au substrat (10).

**11.** Dispositif d'affichage à cristaux liquides, comprenant un polariseur optique et une cellule de cristaux liquides, caractérisé en ce que ledit polariseur optique est celui de la revendication 7 ou de la revendication 8.

**12.** Dispositif d'affichage à cristaux liquides selon la revendication 11, caractérisé en ce que ledit polariseur optique est attaché à ladite cellule de cristaux liquides à l'extérieur de celle-ci.

**13.** Dispositif d'affichage à cristaux liquides selon la revendication 11, caractérisé en ce que ledit polariseur optique est arrangé à l'intérieur de ladite cellule de cristaux liquides.

FIG. 1

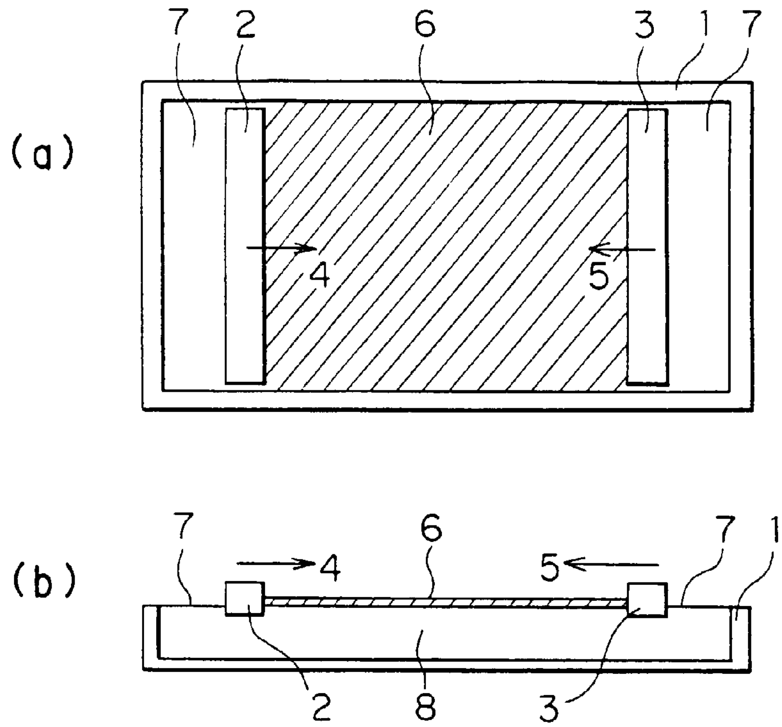


FIG. 2

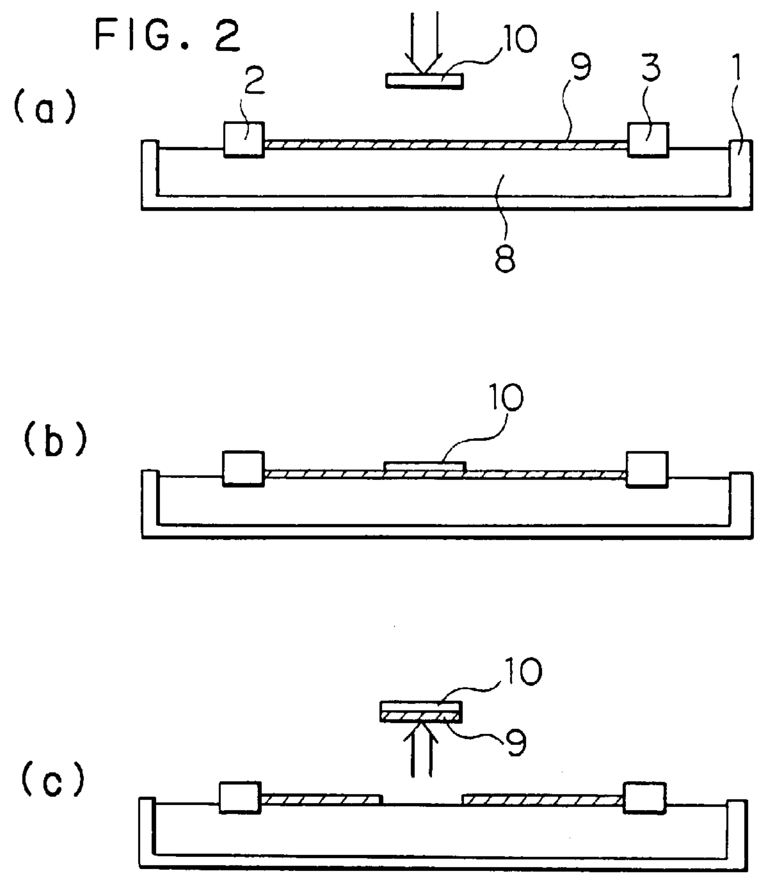

FIG. 3

(a)

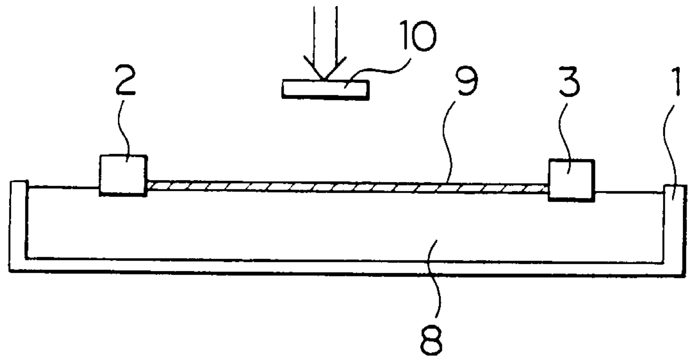


(b)

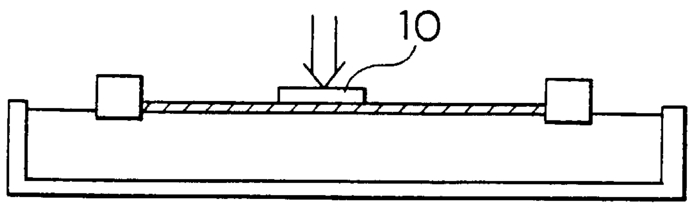


(c)

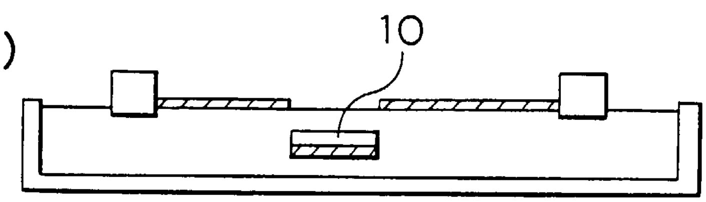

FIG. 4

(a)

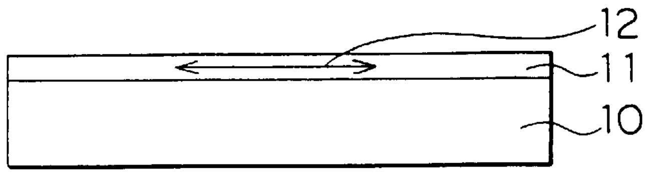


(b)

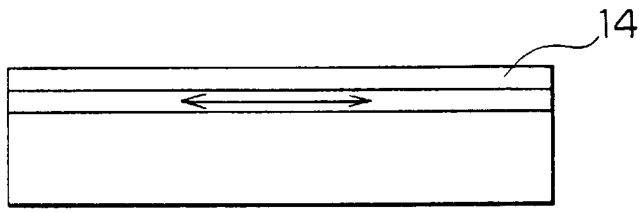


(c)

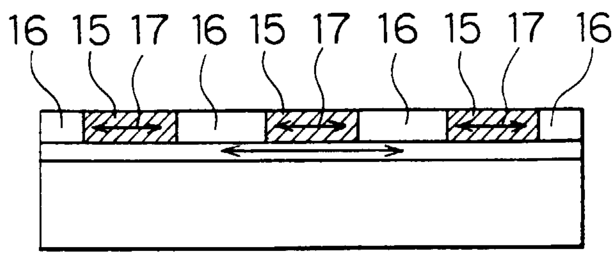


(d)

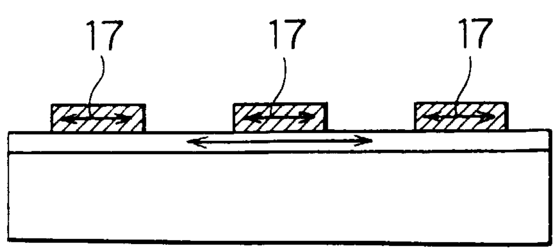

FIG. 5

(a)

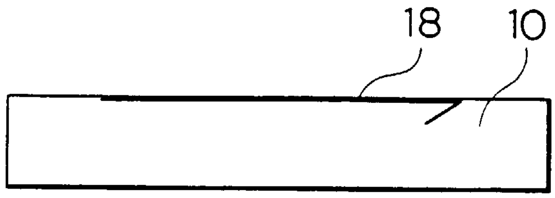


(b)

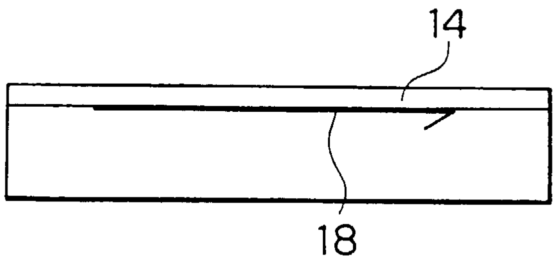


(c)

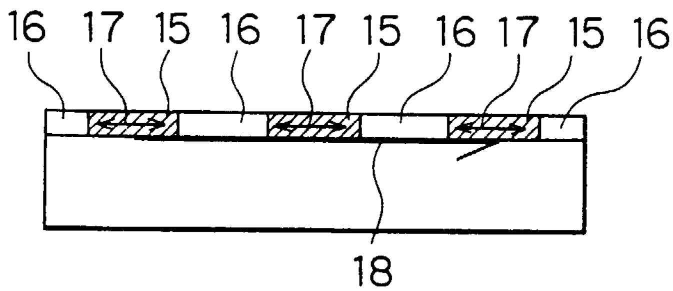


(d)

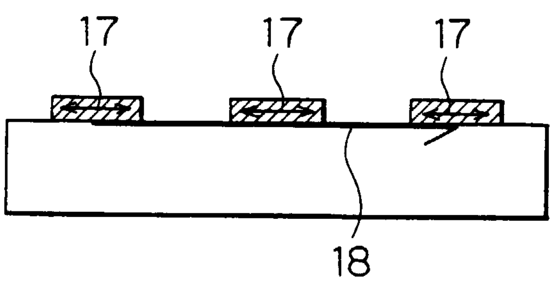

FIG. 6

(a)

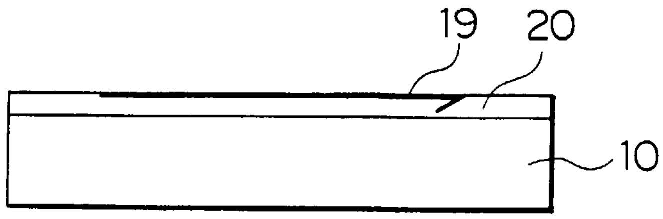


(b)

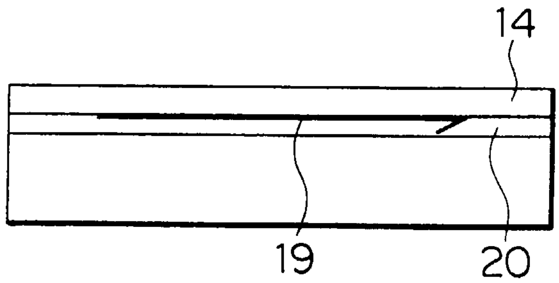


(c)

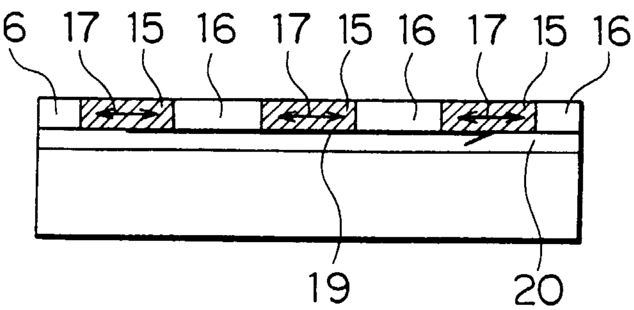


(d)

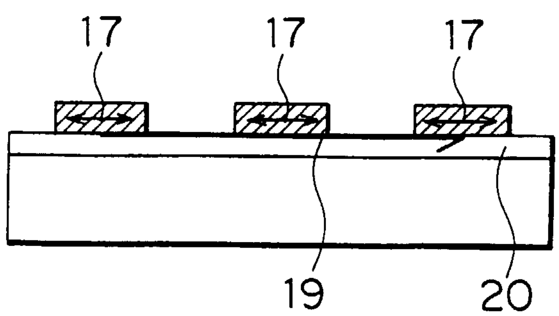

FIG. 7

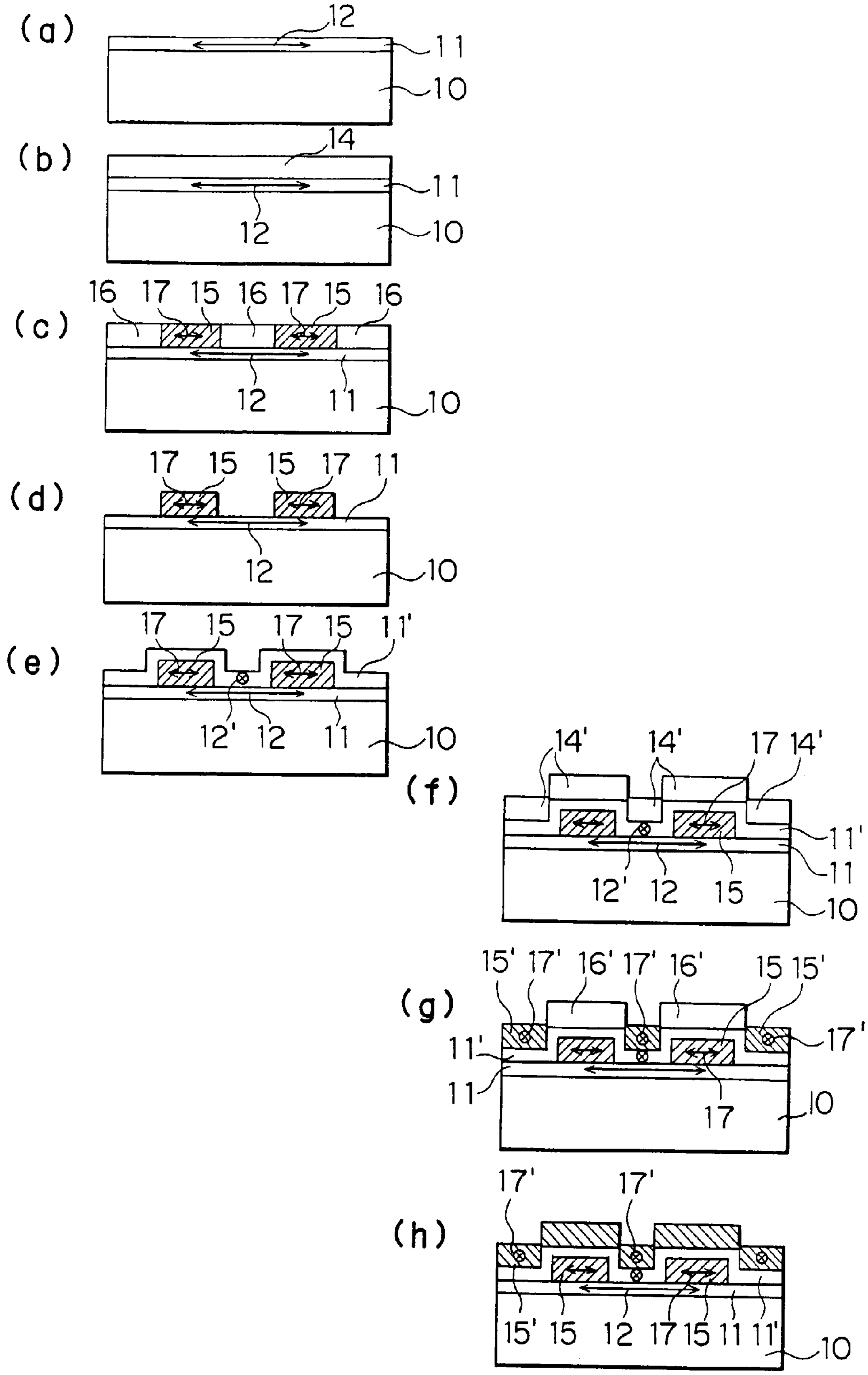

FIG. 8

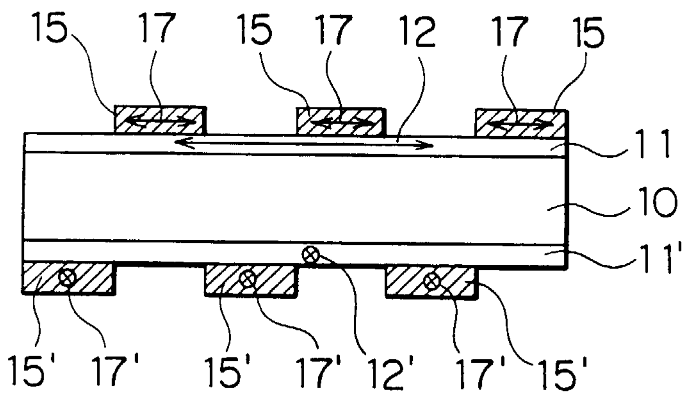


FIG. 10

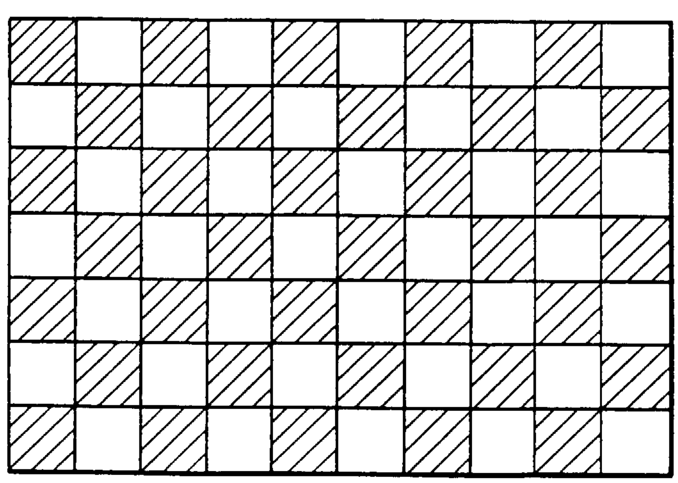

FIG. 9